Europäisches Patentamt

European Patent Office

Office européen des brevets

(11) Publication number: **0 185 631**
**B1**

# EUROPEAN PATENT SPECIFICATION

(45) Date of publication of the patent specification:
**01.03.89**

(51) Int. Cl.⁴: **A 23 D 3/02,** A 23 D 3/00

(21) Application number: **85850365.9**

(22) Date of filing: **14.11.85**

(54) Method for preparing a low caloric spread having a relatively high content of milk fat.

(30) Priority: **06.12.84 SE 8406207**

(43) Date of publication of application:
**25.06.86 Bulletin 86/26**

(45) Publication of the grant of the patent:
**01.03.89 Bulletin 89/9**

(84) Designated Contracting States:
**AT BE CH DE FR GB IT LI NL**

(56) References cited:
**EP-A- 0 142 168**
**FR-A- 1 139 264**
**US-A- 4 307 125**
**US-A- 4 439 461**

(73) Proprietor: **Arla, ekonomisk förening, Dalagatan 3,
S-105 46 Stockholm (SE)**

(72) Inventor: **Wallgren, Kurt, c/o Arla, ekonomisk förening
Box 5407, S-402 29 Göteborg (SV)**
Inventor: **Larsson, Jan-Ake, c/o Arla, ekonomisk
förening Box 126, S-533 01 Götene (SV)**

(74) Representative: **Avellan-Hultman, Olle, Avellan-Hultman
Patentbyra AB P.O. Box 5366, S-102 46 Stockholm 5 (SE)**

## Description

The present invention generally relates to a method for preparing a low caloric spread in the meaning of a margarine prepared from milk fats and possible non milk fats and having a fat content substantially lower than the normal fat content for butter and margarine which is about 80%.

More particularly the invention is directed to such a method for preparing a margarine or spread having about 60% fat content, and the process is special in that the low caloric spread can be prepared without the use of butter oil.

In previously known methods for preparing low caloric spreads comprising butter fats butter oil usually is emulsified with proteins and different other additives. The preparation of butter oil is a relatively expensive and complicated process necessitating a special and complicated equipment which is often not available in many dairies. From manufacturing view point it should therefor be substantially advatageous if the low caloric spread could be prepared without the use of butter oil, since in such case there is no need for providing an expensive and complicated equipment, the relatively complicated process for preparing, handling, storing and packing butter oil is avoided, and at the same time the otherwise appearing problems in handling and taking care of by products from the butter oil preparation like butter milk are avoided.

The object of the invention therefor is to solve the problem of providing a process for preparing a butter fat containing margarine or spread having a substantially lower fat content than the otherwise normal fat content of about 80%, preferably a margarine having between 50 and 70% or preferably about 60% fat content, whereby the process is run without the use of butter oil by utilizing such ordinary equipment which normally is available in the dairies.

According to the invention the process is started by using ordinary cream having 40% fat content, which cream after a certain temperature treatment is treated so that the cream emulsion is broken, whereupon the broken emulsion is heated to a certain temperature and is mixed with different ingredients and is emulsified to a water-in-oil emulsion having the intended final fat content, whereupon the emulsion thereby formed is pasteurized and is finally cooled and worked as conventional in a margarine machine and is packed.

The method may be considered including 4 different preparation steps:

1. The process is started using sweet cream having about 40% fat content. The cream is temperature treated by being cooled to about +5 °C and being stored at said temperature for a period of between 6 and 24 hours. During said storing time fat crystals are formed which make the subsequent breaking of the emulsion possible.

2. The temperature treated and stored cream is subjected to mechanical working giving the cream such a pressure that the emulsion is broken up. This can be made in that the cream is forced through a pump subjecting the cream to such energy that the emulsion is broken up. The pump may for instance be a liquid ring pump of such type which is useful for foodstuff production. The breaking up of the cream emulsion is of critical importance for the subsequent preparation of the water-in-oil-emulsion.

It is of importance that a substantially exact amount of energy is supplied. A too little amount of energy does not give the intended breaking up of the emulsion and therefor does not give the intended result – a too large amount of energy gives a product of butterlike character having about 40% fat, but which does not coincide with the type of product which is intended to be prepared. It is not possible to specifically state the amount of energy which has to be supplied, since the energy may vary from time to time, and since different types of pumps give different pressures and thereby different relative amount of energy. Generally it may, however, be mentioned that the cream ought to be subjected to a pressure of between 1.5 and 3 bar or preferably between 2.0 and 2.5 bar. Instead of using one liquid ring pump it is possible to use a liquid ring pump, for instance a MR-pump manufactured by Alfa-Laval AB, in combination with an emulsifying pump of the type having a choke valve or two MR-pumps having choke valves.

3. In this step the cream with the now broken emulsion is worked. Most of the butter-milk in the fat-milk mixture is allowed to become drained to a water phase tank. The remaining part of the fat-milk mixture is filled in a mantled tank having hot water heating, whereby the fat-milk mixture is heated to a temperature above the melting point of the fat, for instance a temperature of between 35 and 40 °C. After the fat has melted the milk-fat mixture is allowed to separate in a tank for 30 minutes, whereupon the butter-milk is pumped over to the water phase tank.

Salt, melting salts and possible water soluble aroma substances etc. are added to the water phase, and the water phase is tempered to 40–50 °C.

It is also possible to heat the cream to 40–50 °C and to add salt and other water soluble substances.

Also a slight amount of emulsifier and preferably colour substances and aroma substances are added to the fat.

The separated butter fat is mixed with milk strange oils and/or fats in such amount that the final fat content of the spread will be 50–70% or preferably about 60%. The milk strange oils and/or fats may be palm oil, soy oil, colza oil, coconut oil and other cured and/or non-cured oils or mixtures thereof. Also fat soluble substances are added, for instance conventional colouring substances and possible aroma substances and emulsifiers. The fat phase is heated to 50–60 °C.

The butter fat emanating from the original cream may be present in an amount of between 25 and 60% and the other oils and/or fats added in this step may be present in amounts of from 35% to 0% when the total fat of the low caloric spread is 60% or a corresponding amount in spreads having fat contents down to 50% and up to 70% respectively. In a fat content emanating from the cream of less than about 25% for a 60% dairy spread there may be difficulties in breaking the cream emulsion, and 25% animal fat content may in practice be considered the lowest limit possible for preparing the spread.

The mixture of butter fat and oils and fats and other ingredients are emulsified as conventional together with a suitable amount of water phase by a vigorous mechanical working or in that the fat and water phases are forced through a dozing equipment and is thereafter subjected to a vigorous mechanical working, whereby directly a water-in-oil emulsion is obtained having a fat content of about 60% and whereby no by-products in the form of butter milk or other products appear.

4. The water-in-oil emulsion now prepared is pasteurized on a scraper pasteurizing unit or on a tube heat exchanger or a plate heat exchanger at a temperature of 72 °C for 15 seconds or at a lower or higher temperature and corresponding longer and shorter time respectively. The pasteurized emulsion is then cooled and worked as conventional in a margarine machine for providing a smooth, soft product, and finally the ready product is packed and stored or is immediately distributed for sale.

Now the invention will be described more closely in connection to a number of different forms of execution. For each example the real percentage of butter fat in relation to other fat and the relative content of butter fat in relation to other fat is stated within brackets.

Example I
(42/18% / 70/30% / butterfat/other fat)

100 kg cream having a fat content of 42% was cooled to +5 °C and was stored at said temperature for 18 hours thereby providing a crystallization of the fat. For breaking the emulsion of the stored cream the cream was pressed through a liquid ring pump giving the cream a pressure of about 2.5 bar. This pressure provided a breaking of the cream emulsion to the effect that the butter fat of the cream was released in the form of small fat balls. The milk (the butter milk) released from the fat balls was drained to a water phase tank. The total fat amount now was 42 kg.

The cream was heated to +37 °C in a mantled tank by means of water having a temperature of about 60 °C. After the fat had melted it was allowed to stand for about 30 minutes whereby the butter fat separated from the butter milk. The milk was pumped over to the water phase tank. The melted animal fat was mixed both with an emulsifier of ordinary type in an amount of 0,7 kg and with a slight amount of a colouring substance (betakarotene) and also with 14 kg uncured soy oil and 3 kg uncured coconut oil, whereby the total fat content of the mixture was calculated to 60%. Parallelly therewith an amount of the water phase corresponding to 40% of the total weight of margarine to be prepared was taken out. 1 kg salt and a neglectable amount of butter aroma was solved in the water phase for giving the spread the expected taste, and the water phase was heated to about 45 °C.

The water phase was admixed in the liquid fat and the mixture was subjected to a vigorous mechanical working with maintained temperature of +37 °C, whereby the water phase and the fat directly was emulsified to a water-in-oil emulsion. The said water-in-oil emulsion was pasteurized at 72 °C for 15 seconds, and with conventional working in a margarine machine it was cooled to +10 °C and was finally packed and stored for subsequent distribution.

The ready spread had a fat content of 60%, 42% of which was butter fat from the original cream and 18% of which was milk foreign fats. The spread had a good spreadability at refrigeration temperature and had a pleasant, butterlike taste and an attractive structure and consistency. The appearance and lustre of the product was similar to those of butter, and the product was juged to be of good quality. The spread was stored for at least two months after which no precipitation of liquid or proteins could be noted, and further no other change of character, appearance or taste and no bacterial affects could be observed. Depending on the high content of butter fat in the process there was an excess of 18 kg water phase which had to be drained as unuseful material.

Example II
(50/10% / 83/17% / butterfat/other fat)

The process according to example 1 was repeated in that 125 kg cream having a fat content of 40% was cooled to +5 °C and was kept at this temperature for 12 hours thereby crystallizing the butter fat, whereupon the cream was pumped through a liquid ring pump having a choke means, whereby the cream obtained a pressure of about 2.5 bar. Thereby a mixture of fat balls in liquid was obtained. Slight difficulties in breaking the emulsion could be noted, the reason of which was thought to be that the storing time for the cream was too short. The butter milk was drained to a water phase tank, whereas the butter fat from the broken emulsion was heated to +37 °C and was mixed with 0,7 kg emulsifier of the monoglyceride type and with 9,3 kg soy oil and a slight amount of butter aroma. 40 kg of the water phase was used, and 1 kg salt was added to give the low caloric spread the intended taste. The mixture was emulsified, pasteurized and cooled and worked and was packed like in example 1.

The ready margarine had a total fat content of 60%, 50% of which was butter fat emanating from the cream and 10% of which was milk foreign fats. The margarine had a slightly harder consistency than the margarine according to example 1, but also in the present case the margarine was well spreadable at refrigeration temperature. As compared with the margarine according to example 1 it had a slightly more typical, good butter taste, and it had a good consistency, structure, colour and appearance and it had a good storability. About 30 kg of the water phase was unuseful material which was drained.

Example III
(60/0% / 100/0% / butterfat/other fat)

The same method was repeated as in example 1 but with the difference that no milk strange fats were added. Thus the fat was received from 141 kg cream having a fat content of 42% which was stored at +5 °C for 20 hours whereupon the cream was pumped through a liquid ring pump like in example 1. The butter milk was drained to a water phase tank for later use. The collected butter fat which gave a total fat amount of 59.2 kg was mixed with 0.7 kg emulsifier and was heated like in example 1. The fat was emulsified with 40 kg of the previously drained butter milk in which 1 kg salt and a slight amount of colouring substance had been solved.

The low caloric spread thereby obtained and having 60% fat content had a good taste, aroma and structure, and the example illustrates that it is quite possible to prepare the margarine without the addition of milk foreign fats. In order to obtain light-butter having 60% fat an excess of 43 kg of the water phase, however, was obtained which had to be drained as useless material.

Example IV
(30/30% / 50/50% / butterfat/other fat)

The same method was repeated as in example 1 in that 67 kg cream having a fat content of 45% corresponding to 30.1% of the total fat content was cooled to +15 °C and was kept at this temperature for 24 hours. After pressure treatment in a liquid ring pump the butter milk was drained and the butter fat was mixed with 4.2 kg palm oil, 10 kg coconut oil and 15 kg soy oil and 0.7 kg emulsifier. The mixture was heat treated like in example 1.

It proved that the cream emulsion had not become broken and no water-in-oil emulsion was obtained. The reason was that the cooling temperature for the cream was too high and possibly that the storing time was to short. A storing time of more than 24 hours, however, is unsuitable for practical reasons, and the problems therefore are related only to the cooling temperature. Therefore it could be established that the cooling temperature had to be lower than +15 °C.

Example V
(30/30% / 50/50% / butterfat/other fat)

For comparative reasons the test of example 4 was repeated with the same amount of cream having the same fat content. In this case the cream was cooled to +5 °C and was kept at this temperature for 24 hours, whereupon the cream was pressure treated and the butter milk was drained to a water phase tank. The separated butter fat was mixed with 0.7 kg emulsifier of monoglycerid type, 4.2 kg palm oil, 10 kg coconut oil and 15 kg soy oil and was treated like in example 4. In order to obtain the intended fat content of 60% it was necessary, like in example 4, to use all of the drained butter milk, and in addition thereto 1.3 kg water had to be added. The water phase was given an addition of 1 kg salt and a slight amount of colouring substance in the form of betakaroten.

The cream emulsion was easily broken in a single type liquid ring pump, and the margarine obtained had a good taste, consistency and structure.

Example VI
(30/30% / 50/50% / butterfat/other fat)

In order to judge the influence of the storing time at the cooling treatment of the cream the following test were made with the same composition as in examples IV and V. The only difference was that the cream was cooled to +5 °C and was kept at this temperature for only 2 hours. It was shown that it was not possible to break the cream emulsion and this was depending on the fact that the storing time during the cooling treatment step was too short.

Example VII
(32/28% / 53/36% / butterfat/other fat)

In order to investigate the lowest limit for the butter fat part when preparing the margarine according to the invention the following examples VII, VIII, IX and X were made. In the present example VII 69 kg cream having a fat content of 46% was cooled to +5 °C and was kept at this temperature for 24 hours, whereafter the cream was pressed through a liquid ring pump having a choke means in order to break the emulsion. The butter milk was transmitted to a water phase tank and was heated to about 45 °C. The separated butter fat was mixed with 0.75 kg emulsifier of monoglycerid type, 4.3 kg palm oil, 5 kg coconut oil and 19 kg soy oil and was heated to about 45 °C. All butter milk which had previously been drained was mixed in the fat portion, and in order to give the composition the intended fat content of 60% also 0.95 kg water was added. The ingredients were emulsified, pasteurized and cooled, whereby a margarin was obtained which had a good taste, consistency and structure. In this case the butter fat amounted to 32% and the milk strange fats to 28% of the ready margarine. In this case there was no excess of butter milk.

Example VIII
(26/34% / 43/57% / milk fat/other fat)

Example VII was repeated but for the difference that the process started with 65 kg cream having a fat content of 40% equivalent to 26% fat of the ready margarine, and in this case the butter fat was mixed with 0.7 kg emulsifier, 8.3 kg palm oil, 10 kg coconut oil and 15 kg soy oil. Also in this case a margarine was obtained which had a pleasant taste and a fine consistency, and no difficulties with breaking of the emulsion were noted.

Example IX
(23/37% / 38./62% /milk fat/other fat)

In this example the process started with 60 kg cream having a fat content of 38% equivalent to 22.8% fat of the ready margarine, and the butter fat was mixed with 0.75 kg emulsifier, 12 kg palm oil, 10 kg coconut oil and 15.2 kg soy oil. Otherwise the process in this example was made like in example VIII. A slight difficulty in breaking the cream emulsion could be noted, but still the emulsion was broken as wanted and a margarine was obtained which had a good taste and consistency. Also in this case the cream did not give any excess of butter milk, on the contrary 0.95 kg water had to be added for controlling the fat content of the ready margarine to the intended fat content of 60%.

Example X
(19/41% / 32/68% / milk fat/other fat)

The same procedure as in example VIII was repeated but for the difference that the process started with 55 kg cream having a fat content of 35% equivalent to 19% fat content of the ready margarine. The butter fat was mixed with 0.8 kg emulsifier, 12 kg palm oil, 10 kg coconut oil and 18 kg soy oil. In this case there were obvious difficulties in breaking the cream emulsion depending on the low fat content of the cream and the ready margarine got a low amount of butter fat. In this example it should have been necessary to add 3.1 kg water for controlling the fat content to the intended amount of 60%.

Example XI
(30/30% / 50/50% / butterfat/other fat)

For judging the influence of the pressure when breaking the cream emulsion the following examples XI and XII were made. In both examples the procedure was the same as in example V and in both cases the cream was pressed through a liquid ring pump having a choke means. In the present example XI the choke means was adjusted so that the cream got a pressure of about 1.25 bar. It was shown that it was not possible at such low pressure to obtain the necessary breaking of the emulsion for preparing the margarine according to the invention.

Example XII
(30/30% / 50/50% / butterfat/other fat)

In this example the choke means of the liquid ring pump was adjusted so that the cream obtained a pressure of about 3.5 bar. It was shown that a butter like mass having a soft, smeary consistency was obtained at this relatively high pressure, which mass was not useful for the subsequent manufacturing process according to the invention. In previous examples it had been observed that a pressure of about 2–2.5 bar gave a very good result, and now it could consequently be concluded that the pressure of the cream should be between 1.5 and 3.0 or preferably between 2 and 2.5 bar for breaking the cream emulsion.

For determining whether or not the process is useful for other fat contents then the fat content of 60% as illustrated in the above examples two further examples XIII and XIV were executed in which the total fat content of the margarine was 70% and 50% respectively. In example XIII, the 70% embodiment, the result was very good as expected and no difficulties whatsoever appeared in the process. On the contrary a slight difficulty in the emulsification step could be noted when executing the example XIV (the 50% embodiment) and it can be established that the method is not suited for use in industrial scale for fat contents less than 50% of the margarine.

The above examples consequently show, that there are four different factors which are of importance, to give a good margarine, having more than 50–60% fat content according to the described method, viz. the storing temperature and the storing period during the cooling treatment of the cream, the amount of butter fat in relation to other fats, and the pressure at the mechanical working causing the breaking of the cream emulsion.

The above examples are listed in the following table:

Table 1/2

| Ex. nr | Fat % butter/other | Cream kg | Fat content % | Butter fat % | Water kg | Salt kg | Emulsifier kg |
|---|---|---|---|---|---|---|---|
| 1 | 42/18 | 100 | 42 | 42 | −18 | 1 | 0.7 |
| 2 | 50/10 | 120 | 40 | 50 | −30 | 1 | 0.7 |
| 3 | 60/ 0 | 141 | 42 | 59.2 | −42.3 | 1 | 0.7 |
| 4 | 30/30 | 67 | 45 | 30.1 | – | – | – |
| 5 | 30/30 | 67 | 45 | 30.1 | 1.3 | 1 | 0.7 |
| 6 | 30/30 | 67 | 45 | 30.1 | – | – | – |
| 7 | 32/28 | 69 | 46 | 31.7 | 0.95 | 1 | 0.75 |
| 8 | 26/34 | 65 | 40 | 26 | – | 1 | 0.7 |
| 9 | 23/37 | 60 | 38 | 22.8 | 0.95 | 1.1 | 0.75 |
| 10 | 19/41 | 55 | 35 | 19.2 | 3.1 | 1.1 | 0.8 |
| 11 | 30/30 | 67 | 45 | 30.1 | – | – | – |

Table 1/2 (continuation)

| Ex. nr | Fat % butter/oth-er | Cream kg | Fat con-tent % | Butter fat % | Water kg | Salt kg | Emulsifier kg |
|---|---|---|---|---|---|---|---|
| 12 | 30/30 | 67 | 45 | 30.1 | – | – | – |
| 13 | 30/40 | 67 | 45 | 30.1 | –10 | – | 0.8 |
| 14 | 30/20 | 74 | 38 | 30.1 | – | – | 0.8 |

Table 2/2

| Ex. nr. | Palm oil kg | Coconut oil kg | Soy oil kg | Storing of time (h) | cream °C | Pressure treatm. bar |
|---|---|---|---|---|---|---|
| 1 | – | 3 | 14 | 18 | 5 | 2.5 |
| 2 | – | – | 9.3 | 12 | 5 | 2.5 |
| 3 | – | – | – | 20 | 5 | 2.5 |
| 4 | – | – | – | 24 | 15 | 2.0 |
| 5 | 4.2 | 10 | 15 | 24 | 5 | 1.5 |
| 6 | – | – | – | 2 | 5 | 2.8 |
| 7 | 4.3 | 5 | 19 | 24 | 5 | 2.5 |
| 8 | 8.3 | 10 | 16 | 24 | 5 | 2.5 |
| 9 | 12 | 10 | 15.2 | 24 | 5 | 2.5 |
| 10 | 12 | 10 | 18 | 24 | 5 | 2.5 |
| 11 | – | – | – | 24 | 5 | 1.25 |
| 12 | – | – | – | 24 | 5 | 3.5 |
| 13 | 10 | 10 | 19 | 24 | 5 | 2.5 |
| 14 | 5 | 5 | 10 | 24 | 5 | 2.5 |

## Claims

1. Method for preparing margarine having a high content of milk fat, without the need of admixing butter oil, and having a reduced fat content of 50–70%, preferably about 60%, characterized

in that cream having a fat content of 35–40% is cooled to a temperature below +15 °C, preferably about ÷5 °C,

the cooled cream is stored without change of temperature for 6–24 hours or preferably at least 12 hours thereby providing a crystallization of the fat of the cream,

the cooled and stored cream is subjected to a pressure of between 1.5 and 3 bar whereby the cream emulsion is broken thereby giving a butter milk fraction and a butter fat fraction,

the butter milk is separated and drained,

the butter fat is heated to a temperature between 35 and 40 °C,

and the butter fat is mixed with cured and uncured oils and/or fats, so that the total fat content of the margarine to be prepared is at least 50% or preferably 60%, and to the butter fat are added emulsifier, salt, taste substances, colouring substances and vitamines, and, optionally, portion of the butter milk fraction and water,

the mixture is subjected to a vigorous mechanical stirring whereby a water-in-oil emulsion is obtained.

2. Method according to claim 1, characterized in that the cured and uncured oils and/or fats are added to such extent that the amount of butter fat from the cream is between 25 and 50% of the total fat content of the margarine, and the added oils and/or fats amount between 35 and 0% of the total fat content of the margarine.

3. Method according to claim 1 or 2, characterized in that the oils and/or fats are chosen among the group of oils and fats including cured and uncured soy oil, palm oil, colza oil, coconut oil and sunflower oil.

4. Method according to any of claims 1, 2 or 3, characterized in that, in the primary temperature treatment, the cream is cooled to preferably about +5 °C and is kept at this temperature for a period of at least 15 hours before the cream is subjected to the pressure treatment executed for breaking the cream emulsion.

5. Method according to any of the preceding claims, characterized in that water is added upon need before the emulsification step, so that the total fat amount of the ready margarine is 50–70% or preferably about 60%.

6. Method according to any of the preceding claims, characterized in that the butter milk, after the cream emulsion is broken, is drained to a water phase tank for later use, whereas the butter fat is further treated separately before the emulsification step.

7. Method according to any of the preceding claims, characterized in that the pressure treatment of the cream is made in that the cream is forced through a liquid ring pump or a similar pressure means, or through a liquid ring pump having a choke means, or through two ring pumps connected in series and having or not having a choke means.

## Patentansprüche

1. Verfahren zur Herstellung einer Margarine, die einen hohen Gehalt an Milchfett aufweist, ohne dass Butteröl zugegeben werden müsste, und einen verminderten Fettgehalt von 50 bis 70%, vorzugsweise etwa 60% hat, dadurch gekennzeichnet,

dass Sahne mit einem Fettgehalt von 35 bis 40% auf eine Temperatur unter +15 °C, vorzugsweise etwa +5 °C, gekühlt wird,

dass die gekühlte Sahne ohne Änderung der Temperatur für 6 bis 24 Stunden oder vorzugsweise wenigstens 12 Stunden gelagert wird, was eine Kristallisation des Fetts aus der Sahne bewirkt,

dass die gekühlte und gelagerte Sahne einem Druck von zwischen 1,5 und 3 bar ausgesetzt wird, wobei die Sahneemulsion gebrochen wird und eine Buttermilchfraktion und eine Butterfettfraktion entstehen,

dass die Buttermilch abgetrennt und abgezogen wird,

dass das Butterfett auf eine Temperatur zwischen 35 und 40 °C erwärmt wird,

dass das Butterfett mit gehärteten und ungehärteten Ölen und/oder Fetten gemischt wird, so dass der Gesamtfettgehalt der herzustellenden Margarine wenigstens 50% oder vorzugsweise 60% beträgt, und dass dem Butterfett Emulgator, Salz, Geschmacksstoffe, Farbstoffe und Vitamine und ggf. ein Teil der Buttermilchfraktion und Wasser zugegeben werden, und

dass die Mischung heftigem mechanischem Rühren unterworfen wird, wobei eine Wasser-in-Öl-Emulsion entsteht.

2. Verfahren nach Anspruch 1, dadurch gekennzeichnet, dass die gehärteten und ungehärteten Öle und/oder Fette in solchem Umfang zugegeben werden, dass die aus der Sahne stammende Menge an Butterfett zwischen 25 und 50% des Gesamtfettgehalts der Margarine liegt und dass der Anteil der zugegebenen Öle und/oder Fette sich auf zwischen 35 und 0% des Gesamtfettgehaltes der Margarine beläuft.

3. Verfahren nach Anspruch 1 oder 2, dadurch gekennzeichnet, dass die Öle und/oder Fette aus der Gruppe von Ölen und Fetten ausgewählt sind, die gehärtetes und ungehärtetes Sojaöl, Palmöl, Rapsöl, Kokosnussöl und Sonnenblumenöl umfasst.

4. Verfahren nach einem der Ansprüche 1, 2 oder 3, dadurch gekennzeichnet, dass die Sahne bei der primären Temperaturbehandlung auf vorzugsweise etwa +5 °C gekühlt und auf dieser Temperatur für eine Zeitspanne von wenigstens 15 Stunden gehalten wird, bevor sie der Druckbehandlung zum Brechen der Sahneemulsion ausgesetzt wird.

5. Verfahren nach einem der vorstehenden Ansprüche, dadurch gekennzeichnet, dass bei Bedarf vor dem Emulgierschritt Wasser zugefügt wird, so dass der Gesamtfettgehalt der fertigen Margarine 50 bis 70% oder vorzugsweise etwa 60% beträgt.

6. Verfahren nach einem der vorstehenden Ansprüche, dadurch gekennzeichnet, dass die Buttermilch, nachdem die Sahneemulsion gebrochen ist, zur späteren Verwendung in einen Wasserphasentank abgezogen wird, während das Butterfett vor dem Emulgierschritt getrennt weiterbehandelt wird.

7. Verfahren nach einem der vorstehenden Ansprüche, dadurch gekennzeichnet, dass die Druckbehandlung der Sahne in der Weise durchgeführt wird, dass die Sahne durch eine Flüssigkeitsringpumpe oder eine ähnliche Druckvorrichtung, oder durch eine Flüssigkeitsringpumpe mit Drosseleinrichtung, oder durch zwei Ringpumpen, die in Serie geschaltet sind und ggf. eine Drosseleinrichtung aufweisen, gepresst wird.

## Revendications

1. Procédé de préparation d'une margarine ayant une teneur élevée en matière grasse de lait, sans la nécessité d'un mélange de l'huile de beurre, et ayant une teneur réduite en matière grasse de 50–70%, de préférence d'environ 60%, caractérisé

en ce que de la crème ayant une teneur en matière grasse de 35–40% est refroidie à une température inférieure à +15 °C, de préférence d'environ +5 °C,

la crème refroidie est stockée sans changement de température pendant 6–24 heures ou de préférence au moins 12 heures afin qu'il se produise ainsi une cristallisation de la matière grasse de la crème,

la crème refroidie et stockée est soumise à une pression comprise entre 1,5 et 3 bars afin que l'émulsion de crème soit cassée pour donner ainsi une fraction de babeurre et une fraction de matière grasse du beurre,

le babeurre est séparé et évacué,

la matière grasse du beurre est chauffée à une température comprise entre 35 et 40 °C,

et la matière grasse du beurre est mélangée à des huiles et/ou des graisses maturées et non maturées afin que la teneur totale en matière grasse de la margarine à préparer soit d'au moins 50% ou de préférence 60%, et il est additionné à la matière grasse du beurre un émulsifiant, du sel, des substances de sapidité, des substances colorantes et des vitamines et, optionnellement, une partie de la fraction constituée de babeurre et de l'eau,

le mélange est soumis à une agitation mécanique vigoureuse afin que l'on obtienne une émulsion eau-dans-huile.

2. Procédé selon la revendication 1, caractérisé en ce que les huiles et/ou matières grasses maturées et non maturées sont additionnées à un degré tel que la quantité de matière grasse de beurre provenant de la crème soit comprise entre 25 et 50% de la teneur totale en matière grasse de la

7

margarine, et les huiles et/ou matières grasses additionnées s'élèvent à une valeur comprise entre 35 et 0% de la teneur totale en matières grasses de la margarine.

3. Procédé selon la revendication 1 ou 2, caractérisé en ce que les huiles et/ou matières grasses sont choisies dans le groupe constitué d'huiles et de matières grasses comprenant de l'huile de soja, de l'huile de palme, de l'huile de colza, de l'huile de coco et de l'huile de tournesol maturées et non maturées.

4. Procédé selon l'une quelconque des revendications 1, 2 ou 3, caractérisé en ce que, dans le traitement à température primaire, la crème est refroidie à avantageusement environ +5 °C et maintenue à cette température pendant une période d'au moins 15 heures avant que la crème soit soumise au traitement de pression exécuté pour casser l'émulsion de crème.

5. Procédé selon l'une quelconque des revendications précédentes, caractérisé en ce que de l'eau est additionnée en quantité nécessaire avant l'étape d'émulsification afin que la quantité totale de matière grasse de la margarine prête soit de 50–70% ou de préférence d'environ 60%.

6. Procédé selon l'une quelconque des revendications précédentes, caractérisé en ce que le babeurre, après que l'émulsion de crème a été cassée, est évacué vers un réservoir de phase aqueuse pour une utilisation ultérieure, alors que la matière grasse du beurre est encore traitée séparément avant l'étape d'émulsification.

7. Procédé selon l'une quelconque des revendications précédentes, caractérisé en ce que le traitement par pression de la crème est effectué par passage à force de la crème à travers une pompe annulaire à liquides ou un moyen de pression similaire, ou à travers une pompe annulaire à liquides comportant un moyen d'étranglement, ou à travers deux pompes annulaires raccordées en série et comportant ou non un moyen d'étranglement.